# EUROPEAN PATENT APPLICATION

(11) **EP 4 447 408 A1**
(43) Date of publication of application: **16.10.2024**
(21) Application number: 23382348.3
(22) Date of filing: 14.04.2023
(51) Int. Cl.: H04L 65/1095, H04L 67/61, H04L 67/12, H04W 4/70

(54) **REDUNDANT COMMUNICATIONS SELECTOR**

(71) Applicant: Alpha Unmanned Systems, S.L., 28703 Madrid (ES)
(72) Inventor: Escarpenter, Alvaro, Madrid (ES); Baciredo, Nicolas, Madrid (ES)
(74) Representative: Grünecker Patent- und Rechtsanwälte PartG mbB

(57) **Abstract**

The invention relates to a communication selector (100) for use in a communication system for communication between two devices, comprising: a processor (107); a communication channel selector (108), said processor (107) being configured for determining an amount of information transmitted on at least two communication channels (101, 102) of a plurality of parallel communication channels (101, 102) between a first device and a second device, and said communication channel selector (108) being configured for selecting a communication channel (101, 102) for communication between the first device and the second device from the plurality of communication channels (101, 102) based on a comparison, carried out by the processor (107), that compares the determined amounts of information transmitted on the at least two communication channels (101, 102).

## Description

### Background

For the internet of things, loT, in robotics in general and even more importantly in aviation or space flight systems, communication systems for communicating between different parts or different devices, such as between a control device and a device controlled by said control device, are critical components for the functioning of the system.

For example, a loss or disturbance of communication between a control device and a device remotely controlled by said control device, can have severe detrimental consequences, such as losing mission information or losing control over the remotely controlled device, which in the best case may lead to losing the operational opportunity and in the worst case may lead to complete catastrophic loss of the remotely controlled device, e.g. the crashing of an unmanned aerial or space vehicle.

### Problem

It is therefore the object of the present invention to provide means for improving a communication system. In particular, it is an object of the present invention to improve the performance, robustness, stability and reliability of a communication system between two devices.

### Solution

According to the present invention, this object is achieved by the subject-matter of the independent claims.

Advantageous embodiments and further developments are the subject-matter of the dependent claims.

The invention in particular provides a communication selector for use in redundant, equal and parallel communication systems for communication between at least two devices, wherein said communication selector can comprise:
- a processor or processing unit;
- a communication channel selector or multiplexor,
- wherein said processor can be programmed for or can be configured for determining an/the amount of information transmitted on at least two communication channels of a plurality of parallel communication channels between a first device and a second device,
- and wherein said communication channel selector or multiplexor can be configured for selecting a communication channel for communication between the first device and the second device from the plurality of communication channels based on a comparison, carried out, for example, by the processor or processing unit, that compares the determined amounts of information transmitted on the at least two communication channels. Stated differently, the processor or processing unit of the communication selector can also be configured for comparing the determined amounts of information transmitted on the at least two communication channels.

Furthermore, the communication selector, e.g. said communication channel selector or multiplexor or processor, can be programmed for or can be configured for selecting the communication channel for which it has been determined that it is transmitting the largest amount of information.

Stated differently, the communication selector can select the best available communication channel from the plurality of parallel communication channels.

Herein, the expression communication between two devices can inter alia comprise a bi-directional communication between said two devices. In other words both devices can have transceiver capabilities, i.e. they both can send/emit and receive communication data. Stated differently, each device can act as receiver or emitter. However, one device might be configured to serve as a control device for remotely controlling the second device.

Herein, the term communication channel can inter alia be understood as channel or link for transmitting communication signals or communication data or data, e.g. telemetry data, and/or control or command signals, e.g. command or control signals for remotely controlling a device.

Herein, the term information can inter alia comprise data and/or control signals. Furthermore, the term information can herein be understood as information that can be described and quantified in terms of computational bits.

Furthermore, a communication channel can herein be inter alia understood as being implemented as a wireless communication channel, e.g. a radio channel, or as cable-based communication channel, e.g. a fiber optic cable.

Herein, the expression of a plurality of parallel communication channels between a first device and a second device can inter alia be understood as some or all of the communication channels being capable of carrying the same information or at least the same minimal amount of information at the same time. For example, it is possible that all communication channels of the plurality of parallel communication channels carry or transmit the same quantity of information/same information.

Stated differently, in an exemplary system for communication between two devices, when having a plurality of parallel communication channels between said two devices, an attempt can be made to transmit on all channels at all times on each channel the same information.

Such a plurality of parallel communication channels could also be referred to as a plurality of redundant communication channels. Stated differently, all of the plurality of parallel communication channels can be of equal importance and can carry the same information.

Herein, the expression of selecting a communication channel for communication between the first device and the second device from the plurality of communication channels can inter alia be understood as selecting a current communication channel or as selecting a main or primary communication channel which can serve as the currently active main channel or as the currently active primary communication channel between said two devices of said communication system. The expression of selecting a communication channel may further be also understood as switching from a currently selected communication channel to another communication channel from the plurality of communication channels

Furthermore, the selection of a particular communication channel from the plurality of parallel communication channels between a first device and a second device does not necessarily exclude that the non-selected communication channels are not active or do not carry information or any signal.

However, the herein exemplary described communication selector ensures that at any given time and under any scenario, the best available, e.g. most stable or most reliable, communication channel can be selected for communication, in particular bi-directional communication, between two devices, i.e. between said two devices.

The present invention therefore provides means for improving the redundancy, performance, robustness, stability and reliability for the communication between two devices.

The present invention provides a safeguard against the case of an unreliable or lost communication channel negatively affecting the communication between said two devices.

The present invention allows the smooth switching between communication channels of the plurality of parallel communication channels. For example, when the quality or stability of the currently selected communication channel degrades, the communication selector can switch to another communication channel that at that moment provides a more stable way of communication between said two devices.

In particular for the case of the two communicating devices being part of a robotic system and/or being part of an aviation or space flight system, wherein, for example, the first device is a controller for remotely controlling the second device, and wherein, for example, said second device is an aerial vehicle or a ground or a surface vehicle or a space vehicle or any type of sensing or data collecting device, the above and herein described communication selector ensures optimal and reliable communication between said devices.

The herein exemplary described communication selector, e.g. the processor of the communication selector, can be configured for determining an amount of information transmitted on at least two communication channels of a plurality of parallel communication channels between a first device and a second device based on determining the bitrate on a communication channel and/or determining a bitcount on a communication channel or determining the number of bits received per unit of time on a communication channel.

Said possible ways of determining an amount of information transmitted on a communication channel or on at least two communication channels of a plurality of parallel communication channels are exemplary only, i.e. other bit-based metrics for determining an amount of information on a communication channel can be used.

This determination of the amount of information transmitted over a given communication channel can be made for only a subset of or for all the communication channels of the plurality of parallel communication channels.

Using a bit-based measure or bit-based metric for determining the amount of information has inter alia the advantage that the herein exemplary described communication selector can select the best available communication channel independent from the type of communication protocols used. Since only bits are counted, it is not necessary to understand the meaning of the bits themselves.

The herein exemplary described communication selector also can operate/work with communication channels of any bitrates.

For example, let us assume that all communication channels of the plurality of parallel communication channels are supposed to carry the same information or are supposed to operate with the same bitrate.

If then, for example, from said comparison of determined amounts of information transmitted on the at least two communication channels, it is determined that a communication channel that is not the currently selected communication channel is carrying a higher/larger amount of information, e.g. has a higher bitrate or a higher bitcount or a higher number of bits received per unit of time, then this can indicate that the currently selected communication channel has a problem and is not reliable, e.g. due to interference and/or due to an error or other malfunctions.

Stated differently, the term largest amount of information in the context of the herein exemplary described communication selector can, for example, inter alia refer to largest/highest bitrate or largest/highest bitcount or largest/highest number of bits received per unit of time.

Consequently, the herein exemplary described communication selector can then switch to/select a different communication channel that is not affected by any problems and that operates at full capacity.

For completeness, it is noted that in addition of using the determined amount of information transmitted on the at least two communication channels, it is possible that further additional criteria could be determined/applied in order to switch to/select a different communication channel.

For example, the herein exemplary described communication selector, e.g. said communication channel selector or multiplexor or processor or processing unit, may be further configured to determine a received signal strength indicator (RSSI) and/or a noise floor parameter as additional criteria, and then use said additional criteria to determine if a switch to a different communication channel is to be carried and which communication channel should be selected.

For completeness, it is noted that in the case that, from said comparison of determined amounts of information transmitted on the at least two communication channels or on the plurality of communication channels, it is determined that the currently selected communication channel carries or transmits the highest/largest amount of information amongst the plurality of communication channels or it is determined that the currently selected communication channel carries or transmits the same amount of information (e.g. within a predetermined threshold or tolerance) as the other communication channels from the plurality of communication channels, then the herein exemplary described communication selector, e.g. said communication channel selector or multiplexor or processor or processing unit, can be configured for/be programmed for keeping the currently selected communication channel as selected communication channel, i.e. no switch to another communication channel may be required in that case.

The herein exemplary described communication selector may further comprise at least one duplicator or splitter, wherein said duplicator or splitter is being configured to duplicate a signal received at the communication selector over a communication channel from the plurality of parallel communication channels such that one copy of the signal can be directed to the processor and the other copy of the signal can be directed to the communication channel selector or multiplexor.

Such exemplary and optional configuration can inter alia ensure that the process of determining the amount of information transmitted or carried on a particular communication channel is treated separately and does not interfere with actual communication processes of the communication between the two devices.

For example, said possible duplicator or splitter may be implemented as an RS (Recommended Standard) -232 Y component.

The herein exemplary described communication selector may further comprise at least one logic level translator, wherein said logic level translator can be configured for modifying voltage levels of a signal received at the communication selector over a communication channel from the plurality of parallel communication channels to Transistor-Transistor Logic, TTL, levels.

This possible optional logic level translator can inter alia ensure that the communication channel signals or data received at the communication selector can be processed better or easier by the processor or processing unit of the communication selector and/or by the communication channel selector or multiplexor.

For example, a possible logic level translator of the type 232-TTL could modify a voltage of the signals received at the communication selector via the communication channel from 232 voltage levels to corresponding TTL levels to facilitate processing of the received communication channel signals or data by the processor of the communication selector or by the communication channel selector or multiplexor. Furthermore, this can inter alia ensure that the processor or processing unit of the described communication selector is safeguarded against damage from overvoltages.

The herein exemplary described communication selector may further comprise at least one filter, wherein said filter can be configured to be applied to the result/s of the determination (that can be carried out by said processor of the communication selector) of the amount of information transmitted on at least two communication channels of the plurality of communication channels and before a comparison (that also can be carried out by said processor of the communication selector) of the determined amounts of information transmitted on the at least two communication channels is made.

Said possible filter may be a low-pass filter, e.g. moving average filter.

Said filter may further be implemented as a software component, e.g. implemented by the processor or processing unit of the communication selector, or may be implemented as a separate hardware component.

Said possible filter, in particular a low-pass filter, can improve the stability and robustness of the behavior of the communication selector, since possible errors in the calculation or determination of the amount of information transmitted on a communication channel or on at least two communication channels of the plurality of communication channels can be averaged out or smoothed out by said filter.

For example, potential errors caused by the relatively low imprecision or the processor clock (e.g. due to clock interrupts) and errors in the counting process of counting bits when determining the amount of information transmitted on a communication channel, and that lead to errors in the determined amount of information, can be smoothed out by a filter, e.g. a low-pass filter.

This leads to a more stable behavior of the communication selector and can reduce, for example, the number of unnecessary switches from one communication channel to another communication channel, wherein said unnecessary switches may have originated from a faulty determination of the amount of information transmitted on a communication channel.

The herein exemplary described communication selector (e.g. the communication channel selector) may further be configured to switch from a currently selected communication channel from the plurality of parallel communication channels to another communication channel from the plurality of parallel communication channels only if it has been determined (e.g. by the processor of the communication selector), that a/the difference in the determined amounts of information transmitted on the currently selected communication channel and said other communication channel, e.g. a difference in counted bits, e.g. a difference in bitcount(s), or a difference in bitrate(s), is greater than a predetermined minimum threshold.

For example, if it is assumed that the bitrate(s) of the communication channels under normal or nominal operation conditions, e.g. in the absence of any errors, malfunctions or interferences, is/are constant and known, e.g. the nominal bitrate is supposed to be the same for all communication channels, then an exemplary predetermined minimum threshold may be expressed in terms of percentage of said known constant bitrate(s).

For example, said exemplary predetermined minimum threshold may be set to be around 1% to 5% or higher. In practical terms this may lead for example to a predetermined minimum threshold of 50 bits per unit of time, e.g. per second, i.e. 50 bit/s

For another exemplary case in which the bitrate(s) of the communication channels under normal or nominal operation conditions, e.g. in the absence of any errors, malfunctions or interferences is unknown, it is conceivable that said exemplary predetermined minimum threshold is based on calculating/measuring an average bitrate for a given communication channel.

In such an exemplary case, then a percentage of 1% to 5% or higher of the calculated/measured average bitrate(s) can be used to set a/the predetermined minimum threshold.

Stated differently, the herein exemplary described communication selector can exhibit a hysteresis behavior.

Again this can improve the stability of the communication selector, since the number of unnecessary premature switches from one currently selected communication channel to another selected communication channel can be reduced.

The herein exemplary described communication selector can be configured for operating with a plurality of parallel communication channels, wherein some or all of the plurality of parallel communication channels use a different transmission technology and/or wherein some or all of the plurality of parallel communication channels use different transmission frequencies.

For example, one or more of the communication channels can be based on Wi-Fi or Bluetooth protocols and one or more other communication channels from the plurality of parallel communication channels may be based on radio transmission protocols and different transmission frequencies/different transmission frequency bands.

For example, one or more of the communication channels could operate at a frequency of 2.4 GHz or 5.8 GHz while one or more other communication channels from the plurality of parallel communication channels could operate at 900 MHz. However, said operating frequencies are exemplary only, i.e. other operating frequencies can be used for the communication channels.

It is also conceivable that, while some communication channels may operate wirelessly, some communication channels may be cable-based, e.g. using fiber optics.

The herein exemplary described communication selector may be part of a device, e.g. a device that is part of a communication system or a device that includes a communication system.

For example, said device can be a control device for remotely controlling a second device.

For example, the second device can be a remotely controlled device and that is controlled by the first device being a control device.

Said exemplary remotely controlled second device can be, for example, a remotely controlled aerial vehicle, e.g. an unmanned drone, a remotely controlled ground or surface vehicle or a remotely controlled space vehicle or any type of remotely controlled sensing or data collecting device.

In view of the above, an exemplary communication system for communication between at least two devices may comprise:
- a first device and at least one further device, e.g. a second device, wherein said devices may comprise any of the above and herein described features;
- a plurality of parallel communication channels for communication between the first device and the at least one further device, e.g. the second device, wherein said plurality of parallel communication channels may comprise any of the above and herein described features and wherein said communication channels may be established or implemented according to any of the above and herein described means;
- at least one communication selector, wherein said communication selector may comprise any of the above and herein described features; e.g. the communication selector can comprise a processor or processing unit and a communication channel selector or multiplexor;
- and wherein said communication selector can be configured for determining an amount of information transmitted on at least two communication channels of the plurality of communication channels and can be configured for selecting a communication channel for communication between the first device and the at least one further device, e.g. the second device, from the plurality of communication channels based on a comparison of the determined amounts of information transmitted on the at least two communication channels.

Each of said devices of the exemplary communication system may comprise a communication selector. However, it is also possible that only one of the devices comprises a communication selector.

For example, in a possible scenario of the first device being a control device for remotely controlling the second device, it is possible that only the remotely controlled second device has a communication selector in order to ensure that the second device, i.e. the communication selector of the second device, can switch to/select an optimal communication channel to receive control signals/command signals at all times and under all circumstances.

For example, even if the control device might be unable to receive data, e.g. telemetry data, from the remotely controlled second device, the remotely controlled second device may still receive control signals/command signals from the control device, e.g. which allows the control device to send control signals/command signals to the second device that put the second device in a safe operation mode or that cause a reboot or reset of the remotely controlled second device.

The exemplary communication system for communication between at least two devices may comprise a plurality of devices.

For example, it is possible that the first device is being configured as a control device for remotely controlling a plurality of other devices, wherein the communication(s), e.g. pairwise communications, between the first device acting as control device and each of the devices from the plurality of devices controlled by the first device can be carried out using at least one communication selector as exemplary described herein.

It is further possible that a plurality of devices may act as or be configured as a plurality of control devices for remotely controlling at least one further device, and wherein again the communication(s), e.g. pairwise communications, between the plurality of control devices and the at least one further device, which is controlled by said plurality of control devices, can be carried out using at least one communication selector as exemplary described herein.

Each of the plurality of devices can be equipped with at least one communication selector as exemplary described herein.

A corresponding exemplary computer-implementable method for selecting a communication channel amongst a plurality of parallel communication channels between a first device and at least one further device, e.g. a second device, may comprise one, some or all of the following steps:
- establishing a plurality of parallel communication channels for communication between the first device and the at least one further device, e.g. the second device;
- determining an amount of information transmitted on at least two communication channels of the plurality of communication channels;
- selecting a communication channel for communication between the first device and the at least one further device, e.g. the second device, from the plurality of communication channels based on a comparison of the determined amounts of information transmitted on the at least two communication channels;
- and using the selected communication channel for communication between the first device and the at least one further device, e.g. the second device.

As described above, said exemplary steps can be carried out by the above and herein described communication selector and its possible components, e.g. its processor and its communication channel selector or multiplexor.

As also described above, the determining of an/the amount of information transmitted on at least two communication channels of a plurality of parallel communication channels between a first device and at least one further device, e.g. a second device, can be based on determining the bitrate on a communication channel and/or determining a bitcount on a communication channel and/or determining the number of bits received per unit of time on a communication channel.

The selecting of the communication channel can then, for example, be carried out such that the communication channel for which it has been determined that it is transmitting the largest amount of information amongst the plurality of communication channels is selected for the communication between the first device and the at least one further device, e.g. the second device.

As also described above, the results of the determination of an/the amount of information transmitted on at least two communication channels of a plurality of parallel communication channels can be smoothed out by a filter, e.g. a low-pass filter, before a comparison of the determined amounts of information transmitted on the at least two communication channels or transmitted on all communication channels is made.

The herein described exemplary means, devices, systems and method steps all improve the redundancy, performance, robustness, stability and reliability of the communication between two or more devices.

The determination of an/the amount of information transmitted on at least two communication channels of a plurality of parallel communication channels or on all communication channels of the plurality of parallel communication channels can be carried out continuously or at predetermined intervals or it can be triggered by detecting a loss of information or another problem with the currently selected communication channel.

For example, when due to interference or other causes a currently selected communication channel loses information, e.g. parts of the communication are lost and the bitrate count has decreased, a seamless switch to another communication channel from the plurality of parallel communication channels can be made and for which it has been determined that it carries a larger amount of information than the currently selected communication channel and/or that it carries the largest or highest amount of information from the plurality of parallel communication channels.

The following figures illustrate exemplary:
- **Fig.** 1:: Exemplary schematic communication selector configuration
- **Fig.** 2:: Exemplary alternative communication selector configuration
- **Fig.** 3:: Exemplary schematic flow diagram of method for selecting a communication channel
- **Fig.** 4:: Exemplary communication system for communication between two devices

The figures serve to illustrate certain technical aspects of some features of the invention.

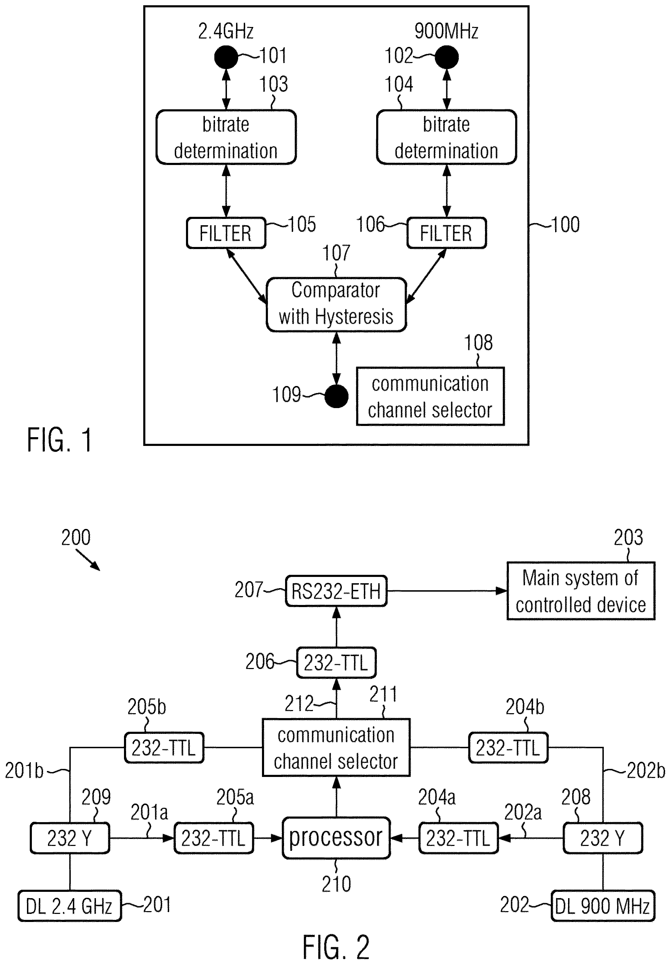

**Fig.1** exemplary shows a simplified schematic view of a communication selector 100 for use in a communication system for communication between two devices (not shown) with a plurality of parallel communication channels 101, 102, wherein a/the communication selector can be located at one of the devices or at both of the devices.

The communication selector 100 is exemplary connected to two exemplary parallel communication channels 101, 102, wherein communication channel 101 exemplary operates at a frequency of 2.4 GHz and communication channel 102 exemplary operates at a frequency of 900 MHz.

However, said operating frequencies are exemplary only, i.e. other operating frequencies can be used for the communication channels 101, 102.

The number of communication channels also is exemplary only, i.e. more than two communication channels can be used or can be available or can be provided.

For example, at least three or more parallel communication channels can be provided to ensure a safe and robust redundancy in a communication system.

The communication selector 100 can be configured to determine 103, 104 for each communication channel 101, 102 an amount of information transmitted on/carried by the respective communication channel 101, 102. For example, the communication selector 100 can be configured for carrying out a bitrate calculation or bitrate determination for each communication channel 101, 102. Said bitrate calculations or bitrate determinations can be carried out by a processor of the communication selector 100, e.g. by processor 107.

The result(s) of said bitrate calculations or bitrate determinations can then optionally be smoothed by a possible filter 105, 106 before a comparison of the results is carried out.

The processor 107 may also be configured for or be programmed for carrying out said possible filter operations. Stated differently, said possible filter 105, 106 can be implemented as software that is running on said processor 107.

The comparison of results can again be carried out by a/the processor of the communication selector 100, e.g. by processor 107.

As described previously, the comparison of the determined amounts of information carried by the different communication channels 101, 102 may take into account a hysteresis condition, such that only when it has been determined that a/the difference in the determined amounts of information transmitted on the currently selected communication channel, e.g. 101, and another/the other communication channel, e.g. 102, is greater than a predetermined minimum threshold, a switch from the currently selected communication channel, e.g. 101, to another/the other communication channel, e.g. 102, is carried out/is initiated.

For example, if it is determined, in the illustrated case, that communication channel 102 carries a larger/higher amount of information (e.g. has a higher bitrate) than the currently selected communication channel 101 and if the from said comparison determined difference in the amount of information between the two communication channels 101, 102 is greater than said exemplary predetermined minimum threshold, then the processor 107 can signal or instruct the communication channel selector or multiplexor 108 to carry out a switch from the currently selected communication channel 101 to the new selected communication channel 102, which then will become the currently used channel 109 for communication, i.e. bi-directional communication, between the (not shown) two devices.

Stated differently, the communication channel selector or multiplexor 108 can set the currently to be used selected communication channel on the basis of the outcome of the comparison between the plurality of communication channels 101, 102.

**Fig.** 2 exemplary shows an alternative simplified schematic view of an alternative exemplary communication selector 200 configuration for use in a communication system for communication between two devices (not shown) with a plurality of parallel communication channels 201, 202.

In the example shown, the exemplary communication channel 201 operates at a frequency of 2.4 GHz and exemplary communication channel 202 exemplary operates at a frequency of 900 MHz.

However, it is emphasized again that said operating frequencies are exemplary only, i.e. other operating frequencies can be used for the communication channels 201, 202.

In the illustrated example, the communication selector 200 is integrated/part of a controlled device, which is remotely controlled by a control device (not shown) and which is in communication with the (not shown) control device via the plurality of parallel communication channels 201, 202, e.g. via an exemplary selected communication channel from the plurality of parallel communication channels 201, 202.

In the shown example, the incoming/received signal from each of the different parallel communication channels 201, 202 is split via a duplicator or splitter, 208, 209, e.g. implemented as an RS (Recommended Standard) -232 Y component, such that one copy 201a, 202a of the communication channel signal can be directed to the processor 210 and the other copy 201b, 202b of the communication channel signal can be directed to the communication channel selector or multiplexor 211.

As explained earlier, such an exemplary and optional configuration can inter alia ensure that the process of determining, by the processor 210, the amount of information transmitted or carried on a particular communication channel 201, 202 is treated separately and does not interfere with actual communication processes of the communication between the (not shown) two devices that use a currently selected communication channel, e.g. communication channel 201, 212.

Before being fed to the processor 210 or to the communication channel selector or multiplexor 211 the voltage levels of the signals (i.e. the signal copies 201a, 201b, 202a, 202b) from the different parallel communication channels 201, 202 can be converted to Transistor-Transistor Logic, TTL, levels with exemplary logic level translators 204a, 204b, 205a, 205b so that they can be easier processed by the processor 210 and by the communication channel selector or multiplexor 211.

For example, a possible logic level translator of the type 232-TTL could modify voltages of the signals received at the communication selector via the communication channel from 232 voltage levels to corresponding TTL levels.

As explained further above in the context of Fig. 1 and in the general part of the description, the processor 210 can be configured for determining for each communication channel 201, 202 an amount of information transmitted on/carried by the respective communication channel 201, 202.

For example, the processor 210 can be configured for carrying out a bitrate calculation or bitrate determination for each communication channel 201, 202.

As described previously, the comparison of the determined amounts of information carried by the different communication channels 201, 202 may take into account a hysteresis condition, such that only when it has been determined that a/the difference in the determined amounts of information transmitted on the currently selected communication channel, e.g. 201, and another/the other communication channel, e.g. 202, is greater than a predetermined minimum threshold, a switch from the currently selected communication channel, e.g. 201, to another/the other communication channel, e.g. 202, is carried out/is initiated.

For example, if it is determined, in the illustrated case, that communication channel 202 carries a larger/higher amount of information (e.g. has a higher bitrate or has a higher bitcount) than the currently selected communication channel 201 and if the from said comparison determined difference in the amount of information between the two communication channels 201, 202 is greater than said exemplary predetermined minimum threshold, then the processor 210 can signal or instruct the communication channel selector or multiplexor 211 to carry out a switch from the currently selected communication channel 201 to the new selected communication channel 202, which then will become the currently used channel 211 for communication, i.e. bi-directional communication, between the (not shown) two devices.

Alternatively, if, after said comparison, the currently selected communication channel, e.g. 201, is still the communication channel carrying the highest amount of information or if said predetermined minimum threshold is not met or not exceeded, then no switch of communication channels is carried out, i.e. the currently selected communication channel, e.g. 201, remains the currently selected communication channel 212.

In the illustrated example, the output or output signal of the communication channel selector or multiplexor 211 can be fed to the main system 203 of the controlled device, e.g. the main computer of the remotely controlled device, e.g. the main flight computer of an aerial vehicle, e.g. an unmanned drone, or a space vehicle.

Again the voltages of the output or output signal of the communication channel selector or multiplexor 211 can be modified using a logic level translator 206 of the type 232-TTL and the possible connection with the main system 203 of the controlled device can be implemented via an RS (Recommended Standard) -232 - Ethernet component 207.

Furthermore, it is noted that the exemplary communication selector 200 of Fig. 2 may also comprise filter components (not shown) similar to the filters of the communication selector 100 of Fig. 1 and which are arranged such so as to smooth out the results of the determination of the amount of information transmitted on at least two communication channels (201, 202) of the plurality of communication channels (201, 202) before any comparisons of the determined amounts are made.

Said possible exemplary filter or filter components (not shown) may, for example, be implemented as software implemented on the processor 210.

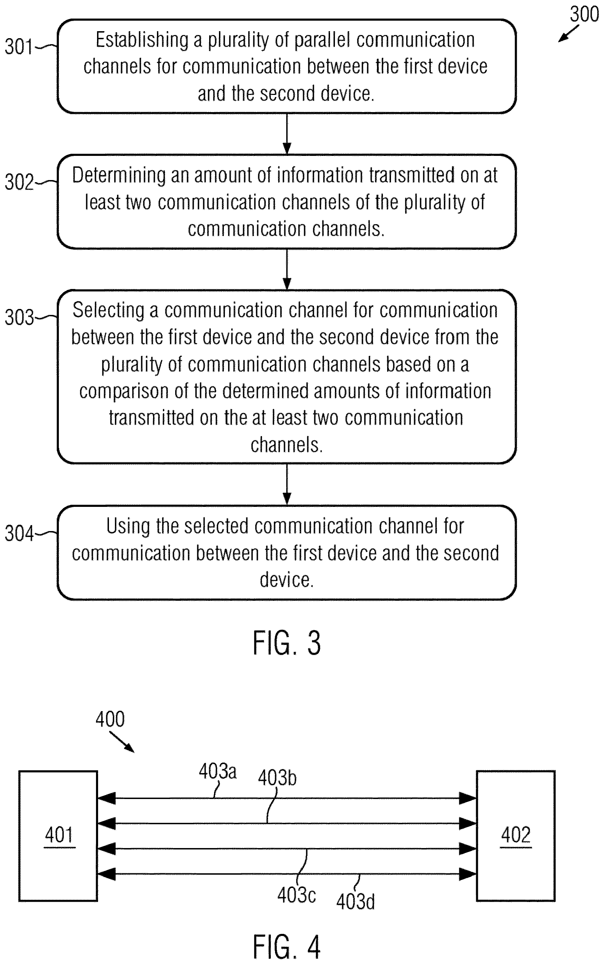

Fig. 3 shows an exemplary schematic flow chart for possible steps of a method 300 for selecting a communication channel among a plurality of parallel communication channels between a first device and at least one further device, e.g. a second device.

Said exemplary method can comprise one, some or all of the following steps.
- establishing (301) a plurality of parallel communication channels for communication between the first device and the at least one further device, e.g. the second device;
- determining (302) an amount of information transmitted on at least two communication channels of the plurality of communication channels;
- selecting (303) a communication channel for communication between the first device and the at least one further device, e.g. the second device, from the plurality of communication channels based on a comparison of the determined amounts of information transmitted on the at least two communication channels;
- and using (304) the selected communication channel for communication between the first device and the at least one further device, e.g. the second device.

As previously described, the selection of a communication channel can be the result of determining the communication channel from the plurality of communication channels for which the highest bitrate or a higher bitcount has been determined.

As also previously described, said exemplary method can be implemented with the use of a communication selector comprising a processor or processing unit and a communication channel selector or multiplexor, and having any of the above-described features.

**Fig. 4** exemplary shows a schematic view of an exemplary communication system 400 for communication between two devices 401, 402.

The first device 401 and/or the second device 402 can be equipped with at least one communication selector (not shown) that can have any of the further above and herein described features.

For completeness and as previously indicated, the communication system 400 may comprise more than two devices that communicate, e.g. pairwise, with each other using the herein described communication selector and using a plurality of parallel communication channels between the devices.

In other words, the herein described communication systems and means and methods are scalable to an arbitrary number of devices and an arbitrary number of communication channels. For example, a first device acting as control device may be configured for communicating with a plurality of further devices to remotely control said plurality of further devices.

An exemplary plurality of four parallel communication channels 403a, 403b, 403c, 403d for bi-directional communication between the first device 401 and the second device 402 are shown.

As described above, the at least one communication selector, which could be integrated into either the first device 401 or into the second device 402 or into both devices, can be configured for determining an amount of information transmitted on at least two communication channels of the plurality of communication channels 403a, 403b, 403c, 403d.

Furthermore, the at least one communication selector can be configured for selecting a communication channel for communication between the first device 401 and the second device 402 from the plurality of communication channels 403a, 403b, 403c, 403d based on a comparison of the determined amounts of information transmitted or received on the at least two communication channels.

The exemplary first device 401 can, for example, be a control device for remotely controlling the second device 402.

Such a remotely controlled device 402 could, for example, be a remotely controlled aerial vehicle or a ground vehicle or a surface vehicle or a space vehicle or a sensing device or a data collecting device.

Followed by Figures Fig. 1, Fig. 2, Fig. 3 and Fig. 4, wherein the reference numerals identify the following components or means or steps:
**100** Exemplary communication selector
**101** Exemplary communication channel, exemplary data link, DL
**102** Exemplary communication channel, exemplary data link, DL
**103** Exemplary determination of amount of information, e.g. bitrate determination or number of bits received per unit of time or bitcount, or other bit-based metric
**104** Exemplary determination of amount of information, e.g. bitrate determination or number of bits received per unit of time or bitcount, or other bit-based metric
**105** Exemplary filter, e.g. low-pass filter
**106** Exemplary filter, e.g. low-pass filter
**107** Exemplary processor, e.g. configured to be able to serve a comparator with hysteresis, e.g. microprocessor
**108** Exemplary communication channel selector or multiplexor
**109** Exemplary currently selected communication channel, exemplary output communication selector
**200** Exemplary communication selector
**201** Exemplary communication channel, exemplary data link (DL)
**201a** Exemplary copy of communication channel/copy of communication channel signal
**201b** Exemplary copy of communication channel/copy of communication channel signal
**202** Exemplary communication channel, exemplary data link (DL)
**202a** Exemplary copy of communication channel/copy of communication channel signal
**202b** Exemplary copy of communication channel/copy of communication channel signal
**203** Exemplary main system 203 of device, e.g. main system of remotely controlled device
**204a** Exemplary logic level translator
**204b** Exemplary logic level translator
**205a** Exemplary logic level translator
**205b** Exemplary logic level translator
**206** Exemplary logic level translator
**207** Exemplary RS (Recommended Standard) -232 - Ethernet component 207
**208** Exemplary RS (Recommended Standard) -232 Y component, exemplary duplicator or splitter
**209** Exemplary RS (Recommended Standard) -232 Y component, exemplary duplicator or splitter
**210** Exemplary processor
**211** Exemplary communication channel selector/exemplary multiplexer
**300** Exemplary method for selecting a communication channel among a plurality of parallel communication channels between a first device and a second device
**301, 302, 303, 304** Exemplary method steps
**400** Exemplary communication system for communication between two devices
**401** Exemplary first device
**402** Exemplary second device, exemplary further device
**403a, 403b, 403c, 403d** Exemplary communication channels, exemplary data links

## Claims

1. Communication selector (100) for use in a communication system for communication between two devices, comprising:
a processor (107);
a communication channel selector (108);
said processor (107) being configured for determining an amount of information transmitted on at least two communication channels (101, 102) of a plurality of parallel communication channels (101, 102) between a first device and a second device,
and said communication channel selector (108) being configured for selecting a communication channel (101, 102) for communication between the first device and the second device from the plurality of communication channels (101, 102) based on a comparison, carried out by the processor (107), that compares the determined amounts of information transmitted on the at least two communication channels (101, 102).

2. Communication selector (100) according to claim 1, wherein the communication selector (100) is configured for selecting the communication channel (101, 102) for which it has been determined that it is transmitting the largest amount of information.

3. Communication selector (100) according to one of the preceding claims, wherein the processor (107) is configured for determining an amount of information transmitted on at least two communication channels (101, 102) of a plurality of parallel communication channels (101, 102) between a first device and a second device based on determining the bitrate on a communication channel (101, 102) and/or determining a bitcount on a communication channel (101, 102) and/or determining the number of bits received per unit of time on a communication channel (101, 102).

4. Communication selector (200) according to one of the preceding claims, further comprising at least one duplicator (208, 209), wherein said duplicator (208, 209) is being configured to duplicate a signal received at the communication selector (200) over a communication channel (201, 202) from the plurality of parallel communication channels (201, 202) such that one copy (201a, 202a) of the signal is directed to the processor and the other copy (201b, 202b) of the signal is directed to the communication channel selector (108).

5. Communication selector (200) according to one of the preceding claims, further comprising at least one logic level translator (204a, 204b, 205a, 205b, 206), said logic level translator being configured for modifying voltage levels of a signal received at the communication selector (200) over a communication channel (201, 202) from the plurality of parallel communication channels (201, 202) to Transistor-Transistor Logic, TTL, levels.

6. Communication selector (100) according to one of the preceding claims, further comprising at least one filter (105, 106), e.g. a low-pass filter, wherein said filter is configured to be applied to the result/s of the determination of the amount of information transmitted on at least two communication channels (101, 102) of the plurality of communication channels (101, 102) and before a comparison of the determined amounts of information transmitted on the at least two communication channels (101, 102) is made.

7. Communication selector (100) according to one of the preceding claims, wherein the at least one communication selector (100) is configured to switch from a currently selected communication channel (101, 102) from the plurality of parallel communication channels (101, 102) to another communication channel (101, 102) from the plurality of parallel communication channels (101, 102) only if it has been determined, by the processor (107), that the difference in the determined amounts of information transmitted on the currently selected communication channel (101, 102) and said other communication channel (101, 102) is greater than a predetermined minimum threshold.

8. Communication selector (100) according to one of the preceding claims, wherein the communication selector (100) is configured for operation with a plurality of parallel communication channels (101, 102), wherein some or all of the plurality of parallel communication channels (101, 102) use a different transmission technology and/or wherein some or all of the plurality of parallel communication channels (101, 102) use different transmission frequencies.

9. Device (401, 402) comprising a communication selector according to one of the preceding claims.

10. Device (401, 402) according to the preceding claims wherein said device is a control device for remotely controlling a second device or wherein the device is a remotely controlled device, such as for example, a remotely controlled aerial vehicle or a remotely controlled ground vehicle or a remotely controlled surface vehicle or a remotely controlled space vehicle or a remotely controlled sensing device or a remotely controlled data collecting device.

11. Communication system for communication between two or more devices comprising:
a first device and at least one further device;
a plurality of parallel communication channels for communication between the first device and the at least one further device;
at least one communication selector according to one of the preceding communication selector claims and being configured for determining an amount of information transmitted on at least two communication channels of the plurality of communication channels and configured for selecting a communication channel for communication between the first device and the at least one further device from the plurality of communication channels based on a comparison of the determined amounts of information transmitted on the at least two communication channels.

12. Method (300) for selecting a communication channel among a plurality of parallel communication channels between a first device and at least one further device, e.g. a second device, the method comprising:
establishing (301) a plurality of parallel communication channels for communication between the first device and the at least one further device, e.g. the second device;
determining (302) an amount of information transmitted on at least two communication channels of the plurality of communication channels;
selecting (303) a communication channel for communication between the first device and the at least one further device, e.g. the second device, from the plurality of communication channels based on a comparison of the determined amounts of information transmitted on the at least two communication channels;
using (304) the selected communication channel for communication between the first device and the at least one further device, e.g. the second device.
